# EUROPEAN PATENT SPECIFICATION

(11) **EP 0 607 764 B1**
(45) Date of publication and mention of the grant of the patent: **05.06.1996**
(21) Application number: 93830467.2
(22) Date of filing: 24.11.1993
(51) Int. Cl.: B65H 35/00, B65H 75/08

(54) **Dispenser for adhesive tape in rolls with cores of different diameters**
Spender für Klebeband in Rollen mit Kernen von verschiedenen Durchmessern
Distributeur pour ruban adhésif en rouleaux avec noyaux de diamètres différents

(30) Priority: 19.01.1993 IT FI930006 U
(43) Date of publication of application: 27.07.1994
(73) Proprietor: SYROM 90 S.p.A., I-50059 Vinci (Firenze) (IT)
(72) Inventor: Paiella, Giuseppe, I-50053 Empoli (IT)
(74) Representative: Mannucci, Gianfranco, Dott.-Ing.

(56) References cited:
- AT-B- 343 546
- US-A- 2 694 533
- US-A- 4 323 202
- US-A- 5 110 401

## Description

The invention relates to a distributing device (also known as a dispenser) for adhesive tape of considerable width - known as parcel tape - which can be presented in reels or rolls having tubular cores of at least two different diameters, of the order of 38 mm and 76 mm, for example. More particularly, the present invention relates to a dispenser of the type including: a first substantiall cylindric centre apt to hold a roll with a tubular core of a first smaller diameter, which first centre is mounted for rotation with friction on a pin of the device; and a supplementary centre which can be fitted on said first centre.

A device according to the preamble of claim 1 is known from US-A-4,323,202, which discloses a dispenser which is apt to dispense an adhesive tape presented in rolls with tubular core, and which is also apt to dispense an adhesive tape from a coreless roll, by means of an adaptor core.

The object of the invention is to enable two or more types of rolls having central cores of different diameters to be used with equal ease with a simple accessory which is easily applied and removed. This object is achieved by a device according to claim 1.

The supplementary centre has a housing by means of which it can slide on said first centre so as to fit it thereon and extract it therefrom. Furthermore said supplementary centre has projections apt to receive and engage a roll with a tubular core of a second greater diameter.

The drawing shows a possible embodiment of the invention and in particular:

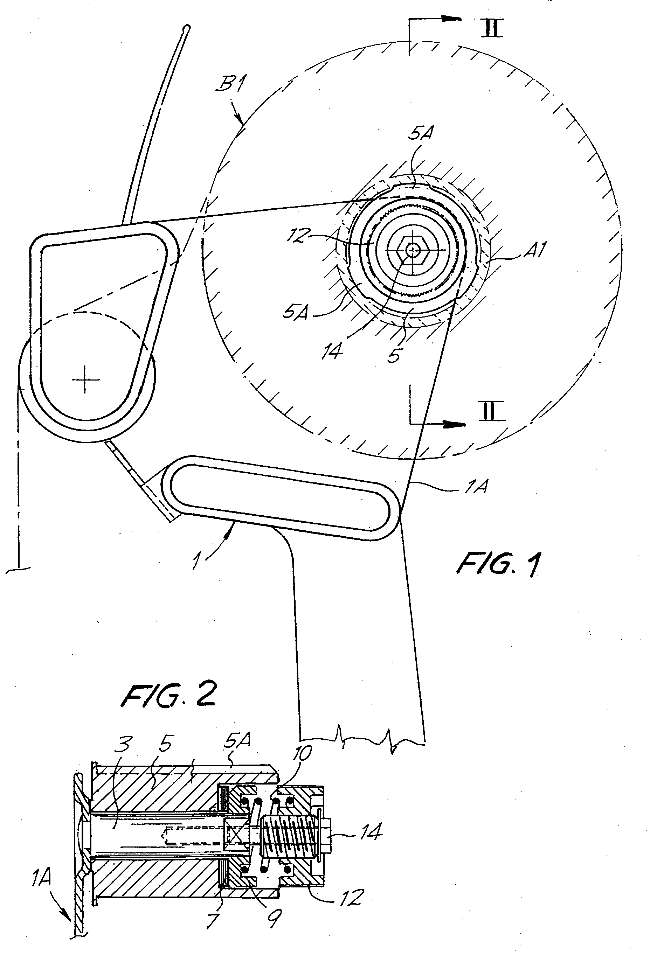

Figs. 1 and 2 schematically show a distributor or dispenser provided with a centre which can hold a roll of smaller diameter, Fig.2 being a local section through II-II of Fig.1;
Figs. 3 and 4 show in the same way as Figs. 1 and 2 the distributor provided with the supplementary centre to hold rolls with cores of greater diameter, Fig.4 being a local section through IV-IV in Fig.3; and
Figs. 5,6, and 7 are perspective views of the distributor and rolls together with the first centre and the supplementary centre for various possible uses.

As shown in the attached drawings, the distributing device or dispenser, indicated in a general way by 1 and of a type known in itself, has on a flat extension 1A a pin 3 engaged in the form of a screw stud, on which may be fitted a first centre 5 which can rotate on the pin 3 with a degree of friction. For this purpose, the centre 5 has a frontal surface which can be acted on by a friction disc 7 pressed against the said frontal surface by a discoid 9 which in turn is pressed elastically by a spring 10; the load of the spring 10 can be adjusted by means of a knob 12 engaged by screwing in an axially adjustable way on a threaded rod with an end 14 which is axially engaged to form a coaxial extension of the pin 3. This friction device is familiar in itself. The said first centre 5 has small external longitudinal ribs 5A enabling the tubular core A1 of a roll B1 of adhesive parcel tape to be held with a degree of friction , the roll B1 having the said core A1 of the smaller diameter.

B2 indicates a roll of adhesive tape which is formed on a core A2 of greater diameter.

Both types of roll are available commercially and the distributing device 1 is equipped to be capable of using rolls of these two types or of other types having internal core diameters different from that of the core A2. This is achieved by using a special accessory in the form of a supplementary centre 17, which may be made simply in one piece from moulded synthetic resin, with large cavities to reduce the mean thickness of the said accessory; the supplementary centre 17 forms a tubular internal housing 17A with longitudinal grooves 17A1 of a size and shape such that the said supplementary centre 17 can be fitted on to the first centre 5 with ribs 5A, which remains engaged with the dispenser 1. This supplementary centre 17 also has, externally, a set of three projections 17B with small external longitudinal ribs 17C, to form an overall profile contained in a theoretical cylindrical surface which is slightly greater than the dimension of the internal cylindrical surface of the core A2 which is of greater diameter than the core A1, and on which the roll B2 is wound.

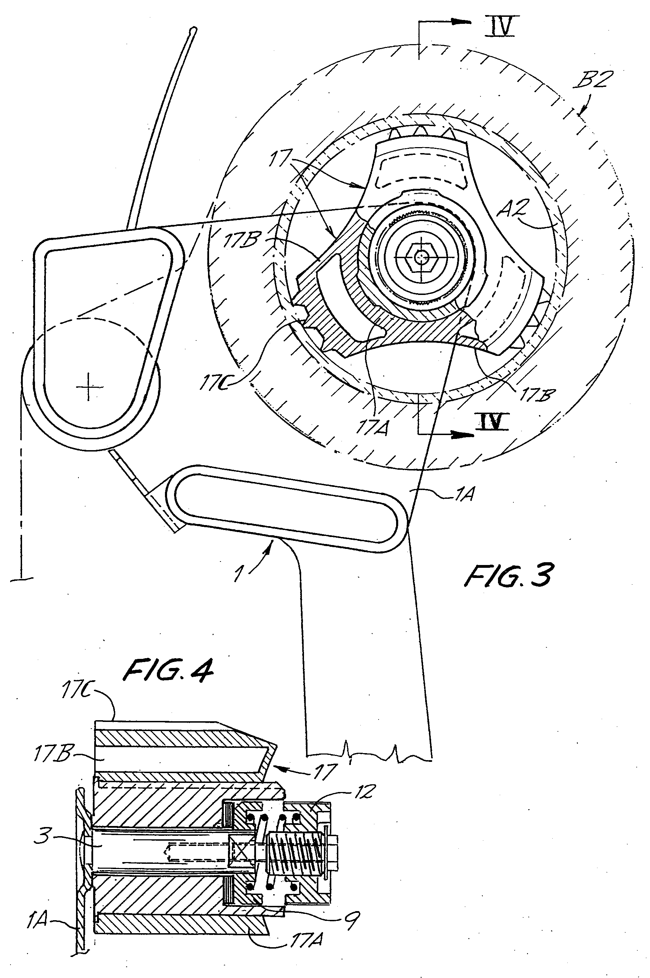

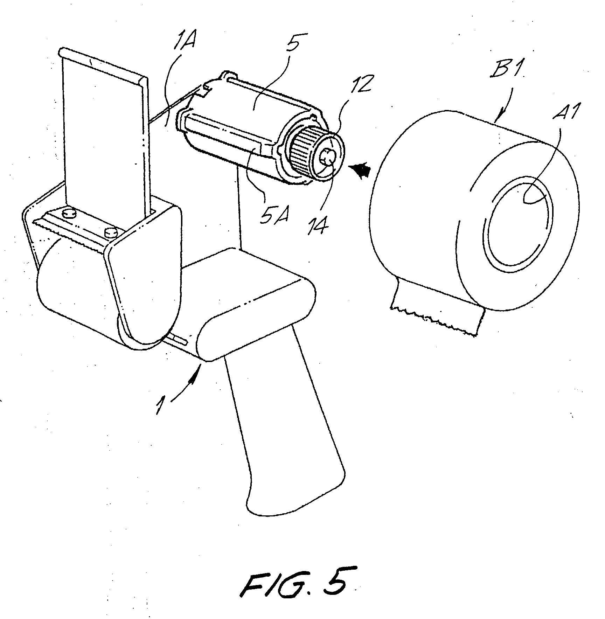

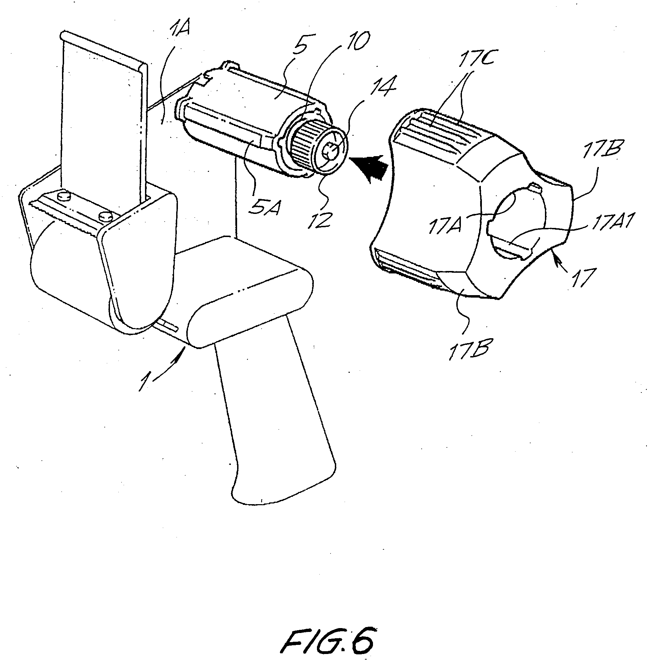

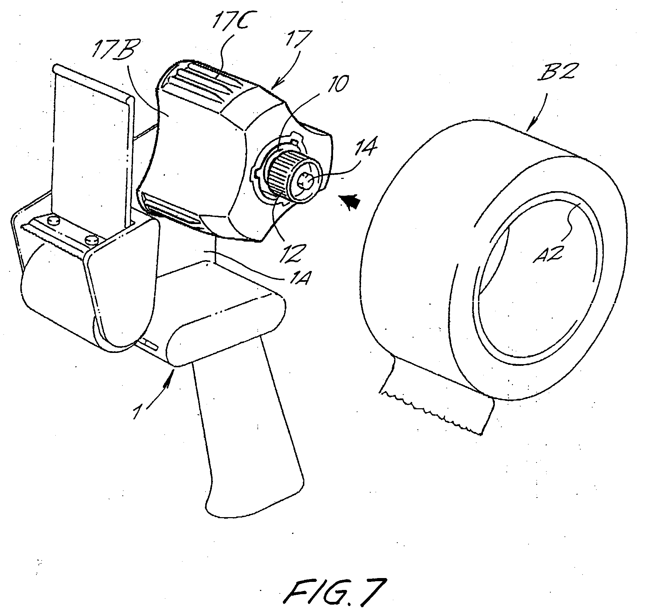

The supplementary centre 17 can be fitted - as shown in Figs. 3, 4, 6 and 7 - on to the first centre 5 of the dispenser 1 with a degree of friction; a roll B2 having the core A2 of greater diameter, corresponding to the external diameter of the overall profile of the supplementary centre 17, can be fitted on the supplementary centre 17.

The same distributing device or dispenser 1 can therefore be used, with the simple accessory 17 of suitable diameter, to dispense the adhesive tape either from a roll of type A1, B1 or from a roll of type A2, B2. If rolls having cores of a third diameter different from and greater than that of the roll B1, A1 come onto the market, it is possible to provide a further supplementary centre of the same type as 17 for this particular and different roll core diameter.

## Claims

1. Distributing device for adhesive tape of considerable width presented in rolls with tubular cores, comprising: a first substantially cylindric centre (5) which can hold a roll (B1) with a tubular core (A1) of a first smaller diameter, which first centre (5) is mounted for rotation with friction on a pin (3) of the device; and a supplementary centre (17) which can be fitted on the said first centre (5), wherein said supplementary centre (17) has a housing (17A) by means of which said supplementary centre (17) is apt to slide on said first centre (5) so as to fit it thereon and extract it therefrom, and wherein said supplementary centre (17) has projections (17B) apt to receive and engage a roll (B2) with a tubular core (A2) of a second greater diameter;
characterized in that
said first centre (5) has three external longitudinal ribs (5A) for engaging the roll (B1) with core (A1), and in that said supplementary centre (17) in its central housing (17A) has at least three longitudinal grooves (17A1) with which said supplementary centre (17) is rotationally engaged with said external longitudinal ribs (5A) of said first centre.

2. Distributing device according to claim 1, wherein said first smaller diameter is in the order of 38 mm and said second greater diameter is in the order of 76 mm.

## Patentansprüche

1. Spender für Klebeband größerer Breite, das in Rollen mit rohrförmigen Kernen vorliegt, mit einer ersten, im wesentlichen zylindrischen Nabe (5), die eine Rolle (B1) mit einem rohrförmigen Kern (A1) mit einem ersten, kleineren Durchmesser halten kann, wobei die erste Nabe (5) mit Reibung drehbar auf einem Stift (5) des Gerätes gelagert ist; und einer Zusatznabe (17), die auf die erste Nabe (5) aufsetzbar ist, wobei die Zusatznabe (17) ein Gehäuse (17A) hat, mit dem die Zusatznabe (17) auf die erste Nabe (5) mit Paßsitz aufschiebbar und von ihr abziehbar ist, und wobei die Zusatznabe (17) Vorsprünge (17B) zur Aufnahme und Abstützung einer Rolle (B2) mit einem rohrförmigen Kern (A2) mit einem zweiten, größeren Durchmesser aufweist,
dadurch **gekennzeichnet,** daß
die erste Nabe (5) drei äußere Längsrippen (5A) zum Angriff an der Rolle (B1) mit dem Kern (A1) aufweist, und daß die Zusatznabe (17) in ihrem zentralen Gehäuse (17A) mindestens drei Längsnuten (17A1) aufweist, mit denen die Zusatznabe (17) drehfest in die äußeren Längsrippen (5A) der ersten Nabe eingreifen kann.

2. Spender nach Anspruch 1, bei dem der erste kleinere Durchmesser in der Größenordnung von 38 mm und der zweite größere Durchmesser in der Größenordnung von 76 mm liegt.

## Revendications

1. Dispositif distributeur pour ruban adhésif de grande largeur présenté en rouleaux avec des noyaux tubulaires comprenant: un premier centre essentiellement cylindrique (5) qui peut retenir un rouleau (B1) avec un noyau tubulaire (A1) d'un premier diamètre plus petit, lequel premier centre (5) est monté pour tourner avec frottement sur un axe (3) du dispositif; et un centre supplémentaire (17) qui peut être adapté sur ledit premier centre (5), dans lequel ledit centre supplémentaire (17) comporte un logement (17A) au moyen duquel ledit centre supplémentaire (17) est apte à glisser sur ledit premier centre (5) de façon à s'adapter sur celui-ci et être extrait de celui-ci et dans lequel ledit centre supplémentaire (17) présente des prolongements (17B) aptes à recevoir et à venir au contact d'un rouleau (B2) avec un noyau tubulaire (A2) d'un deuxième diamètre plus grand, caractérisé en ce que ledit premier centre (5) présente trois nervures longitudinales externes (5A) pour la mise au contact du rouleau (B1) avec le noyau (A1) et en ce que ledit centre supplémentaire (17) dans son logement central (17A) a au moins trois rainures longitudinales (17A1) avec lesquelles ledit centre supplémentaire (17) est engagé à rotation avec lesdites nervures longitudinales externes (5A) dudit premier centre.

2. Dispositif distributeur selon la revendication 1, dans lequel ledit premier diamètre plus petit est de l'ordre de 38 mm et ledit deuxième diamètre plus grand est de l'ordre de 76 mm.
